# FASCICULE DE BREVET EUROPEEN

(11) **EP 1 445 134 B1**
(45) Date de publication et mention de la délivrance du brevet: **06.04.2011**
(21) Numéro de dépôt: 04364005.1
(22) Date de dépôt: 30.01.2004
(51) Int. Cl.: B60J 1/20

(54) **Procédé de fabrication de stores à enrouleur à support d'enroulement non cylindrique, store et moule correspondants**
Verfahren zur Herstellung einer Abdeckungsrolle mit nicht cylindrischem Wickeleinrichtungträger, zugehöriger Abdeckung und Formwerkzeug
Fabrication process for rollerblind with not cylindrical winder assembly support, blind and mold thereof

(30) Priorité: 31.01.2003 FR 0301227
(43) Date de publication de la demande: 11.08.2004
(73) Titulaire: Advanced Comfort Systems France SAS - ACS France, 79300 Bressuire (FR)
(72) Inventeur: Cousson, François, 79430 La Chapelle Saint Laurent (FR)
(74) Mandataire: Bioret, Ludovic

(56) Documents cités:
- DE-A- 2 841 218
- FR-A- 2 750 158
- FR-A- 2 816 983

## Description

Le domaine de l'invention est celui des stores à enrouleur, notamment pour véhicules automobiles. Plus précisément, l'invention concerne les stores destinés à être déployés en regard de vitres non rectangulaires, nécessitant que le bord libre (associé à la barre de tirage) de la toile déployée ne soit pas parallèle à la position qu'il a lorsque la toile est repliée.

De façon connue, les vitres de portières latérales, les pare-brise arrière ou les pavillons vitrés de véhicules peuvent être équipés de store d'occultation. Ceux-ci comprennent généralement un boîtier intégrant un tube d'enroulement, le rideau du store étant fixé au tube d'enroulement d'une part, et à une barre de tirage d'autre part. La barre de tirage est déplacée, manuellement ou de façon motorisée, entre deux positions extrêmes, une position déployée, ou d'occultation, et une position repliée, ou enroulée.

La plupart du temps, le tube d'enroulement est cylindrique, et la barre de tirage reste parallèle à elle-même, lors de son déplacement (enroulement ou déroulement de la toile).

Cependant, du fait notamment de l'évolution des formes des véhicules automobiles, de nombreuses vitres actuelles ne sont plus rectangulaires. En particulier, il est courant que la partie supérieure de la vitre d'une portière soit inclinée vers l'avant ou l'arrière du véhicule, en fonction notamment de la forme du pavillon.

Pour que la barre de tirage puisse prendre une inclinaison différente entre les positions déployée et repliée, on a pensé à monter une toile ayant une forme sensiblement trapézoïdale sur un tube d'enroulement conique de façon à proposer un enroulement de l'écran souple adapté à sa forme. Une telle approche est par exemple décrite dans le document de brevet FR-2 750 158 au nom du titulaire de la présente demande de brevet.

Cette technique permet d'atteindre le résultat voulu, mais présente toutefois de nombreux inconvénients liés à la fabrication du tube d'enroulement conique, et au montage correspondant du store.

En effet, la fabrication des cônes ou d'éléments tronconiques est clairement plus coûteuse que celle de tubes cylindriques que l'on obtient aisément, par exemple par extrusion. Il se pose non seulement des problèmes de complexité de fabrication, mais également de temps de fabrication.

De plus, le montage de l'écran souple sur le support d'enroulement n'est pas facile, et il faut notamment éviter que celui-ci plisse lors de son enroulement. La fabrication d'un tel store suppose donc généralement plusieurs étapes, et en particulier le montage d'un élément tronconique sur un premier élément cylindrique, obtenu préalablement, puis la fixation, par exemple par collage, de la toile formant l'écran d'occultation sur cet élément tronconique.

Une autre approche consiste à rapporter, par collage, un élément de feutrine à une extrémité d'un tube cylindrique, pour créer un décalage de diamètre entre les deux extrémités. Mais il s'agit d'une technique quasi-artisanale, qui nécessite une main d'oeuvre importante (découpage de la feutrine, mise en place, collage,...). Clairement, ceci n'est pas adapté à une production de masse.

En outre, le support d'enroulement obtenu ainsi n'est pas parfaitement tronconique, mais simplement « en escalier », ce qui peut provoquer des plis, rendre difficile la fixation de la toile sur toute la longueur du support, et/ou perturber le déroulement ou l'enroulement.

L'invention a notamment pour objectif de pallier ces inconvénients de l'état de la technique.

Plus précisément, un objectif de l'invention est de proposer une technique de fabrication d'un store à support non cylindrique qui soit plus simple et plus efficace à mettre en oeuvre que les techniques connues.

Ainsi, l'invention a notamment pour objectif de fournir une telle technique, qui permette de réduire les coûts et les temps de fabrication.

Un autre objectif de l'invention est de fournir une telle technique, qui permette de réduire les opérations manuelles, et qui soit aisément et efficacement automatisable.

L'invention a également pour objectif de fournir une telle technique, qui permette d'obtenir des stores efficaces, présentant notamment de bonnes qualités d'enroulement et de déroulement.

Ces objectifs, ainsi que d'autres qui apparaîtront plus clairement par la suite, sont atteints à l'aide d'un procédé de fabrication d'un store à enrouleur présentant un écran souple dont un premier bord est solidaire d'une barre de tirage et un second bord solidaire d'un support d'enroulement de forme non cylindrique et adaptée à l'enroulement dudit écran souple, ladite barre de tirage prenant des positions non parallèles lors de son déplacement. Selon l'invention, ladite forme du support d'enroulement est obtenue par moulage ou surmoulage, ledit second bord de l'écran souple étant pris simultanément dans la masse dudit support d'enroulement.

Ainsi, l'étape de fixation de l'écran sur le support après la fabrication de ce dernier est supprimée. On obtient donc une gamme de fabrication réduite, et la fixation de l'écran est réalisée de façon simple et efficace.

De façon avantageuse, ladite forme du support d'enroulement est tronconique. Cependant, d'autres formes similaires peuvent être envisagées (par exemple une forme tronconique par morceaux), et plus généralement des formes adaptées à des surfaces particulières d'écran, ou de vitre à occulter.

Ledit support d'enroulement peut avantageusement obtenu par surmoulage d'un élément non cylindrique sur un élément cylindrique.

Préférentiellement, ledit élément cylindrique est un tube métallique.

Selon un mode de réalisation préférentiel de l'invention, ledit moulage ou surmoulage est réalisé en un matériau nécessitant une pression de l'ordre de 15 bars et/ou une température, de l'ordre de 80°, de façon à ne pas détériorer ledit écran souple.

Notamment, ledit matériau peut être du polyuréthane.

Selon un mode de réalisation particulier, ledit matériau présente une dureté de l'ordre de 70 Shore A. On obtient ainsi un support relativement souple, qui peut permettre un meilleur enroulement et/ou déroulement de la toile.

Dans un premier mode de mise en oeuvre, ledit second bord forme un angle de l'ordre de 90° avec la tangente dudit support d'enroulement. Cette approche est a priori la plus aisée à mettre en oeuvre.

Selon un second mode de mise en oeuvre avantageux, que ledit second bord forme un angle inférieur à 45° (et préférentiellement le plus faible possible) avec la tangente dudit support d'enroulement.

On obtient ainsi un enroulement plus efficace, limitant le risque de bosse au niveau de la fixation dudit second bord.

L'invention concerne également les stores à enrouleur fabriqué selon ce procédé. Un tel store présente un écran souple dont un premier bord est solidaire d'une barre de tirage et un second bord solidaire d'un support d'enroulement de forme non cylindrique et adaptée à l'enroulement dudit écran souple, ladite barre de tirage prenant des positions non parallèles lors de son déplacement, ladite forme du support d'enroulement comprenant un élément moulé ou surmoulé, ledit second bord de l'écran souple étant pris simultanément dans la masse dudit support d'enroulement.

Selon une application préférentielle de l'invention, ledit store est destiné à équiper une portière de véhicule automobile.

L'invention concerne encore les moules pour la fabrication d'un tel store à enrouleur. Ces moules définissent ladite forme du support d'enroulement, et comprennent des moyens pour prendre simultanément dans la masse dudit support d'enroulement ledit second bord.

Avantageusement, le moule comprend une fente permettant le passage d'une portion dudit écran souple.

De façon préférentielle, le moule comprend au moins un coussin formant des moyens d'étanchéité empêchant le matériau de moulage de se diffuser sur une portion dudit écran souple.

Préférentiellement, on prévoit deux coussins en vis-à-vis venant prendre en sandwich ledit écran souple.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins parmi lesquels :
- la figure 1 présente, de façon simplifiée, un store à enrouleur tronconique selon l'invention ;
- la figure 2 illustre l'opération de surmoulage permettant de fabriquer le store de la figure 1.

L'invention concerne donc un nouveau procédé de fabrication d'un store à enrouleur, dont le support d'enroulement n'est pas cylindrique. De tels supports d'enroulement non cylindriques, classiquement tronconiques, sont nécessaires lorsque les stores sont destinés à occulter des surfaces non rectangulaires, telles qu'une vitre latérale de véhicule. La surface à occulter peut notamment avoir une forme essentiellement trapézoïdale.

Dans ce cas, l'écran d'occultation doit également avoir, lorsqu'il est déployé, une surface trapézoïdale. En d'autres termes, la barre de tirage n'est pas parallèle, lorsque la toile est déployée, à la position qu'elle avait lorsqu'elle était en position repliée. Classiquement, dans le cas d'une portière de véhicule automobile, la barre de tirage est sensiblement horizontale en position repliée, alors qu'elle se trouve inclinée, pour suivre le mouvement du pavillon, en position déployée.

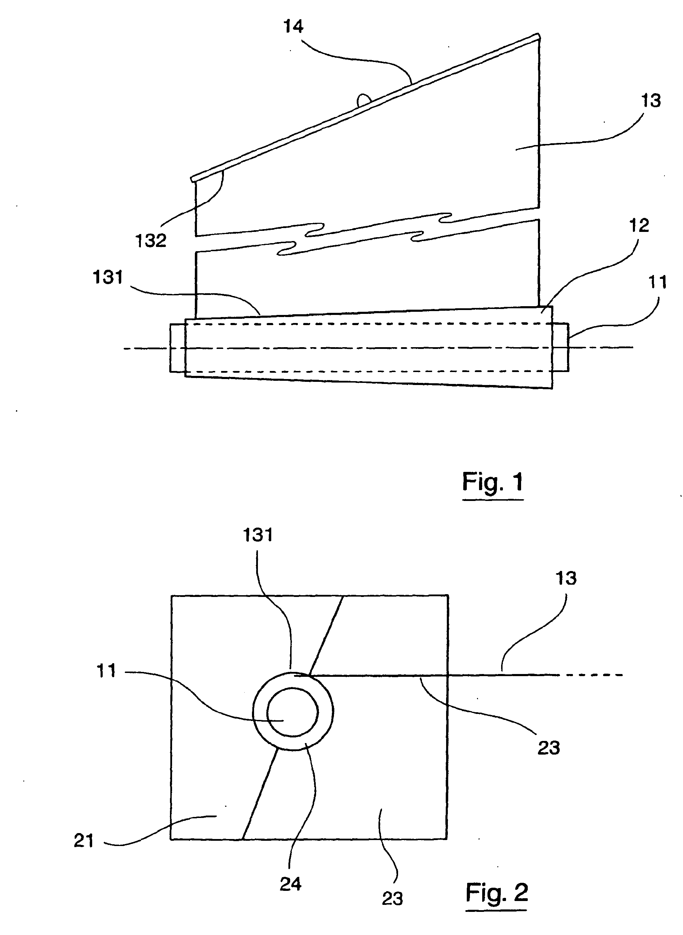

La figure 1 illustre schématiquement un tel store à enrouleur, réalisé selon le procédé de l'invention.

Il comprend donc tout d'abord un tube cylindrique 11, par exemple métallique, sur lequel un cône (plus précisément un élément ou escalier tronconique) 12 a été rapporté par surmoulage. L'écran souple 13 est solidarisé à ce cône 12 par un bord 131, alors que son autre bord 132 est solidarisé à une barre de tirage 14. Cet écran souple est ici formé par une toile, ou un tissu, en matériau adapté.

Comme on le voit sur cette figure 1, la barre de tirage 14 est inclinée de façon à suivre la forme de la vitre à occulter. Cela suppose que la forme de l'écran souple 13 est trapézoïdale, et qu'il est nécessaire de disposer d'un élément conique 12 pour obtenir un enroulement correct, sans pli.

Classiquement, le tube à enrouleur 11 peut être monté dans un boîtier, sur des paliers, ou dans un logement prévu à cet effet à l'intérieur de la portière. Dans ce cas, une fente permettant le passage de la toile est prévue dans la garniture de cette portière.

L'entraînement de la toile peut être manuel ou motorisé. Dans le premier cas, des moyens de rappel peuvent être associés au tube d'enroulement, par exemple sous la forme d'un ressort monté à l'intérieur de celui-ci.

Dans le second cas, on peut prévoir des rails de guidage, dans lequel circulent les extrémités de la barre 14, des moyens de motorisation agissant sur ces extrémités et/ou sur le tube 11.

Selon l'invention, le bord 131 de la toile 13 n'est pas collé, ou rapporté de toute autre manière sur le cône 12, après son surmoulage et son refroidissement. En effet, on évite cette opération, généralement peu aisée, en réalisant la liaison de la toile et du cône directement lors du surmoulage de ce dernier. En d'autres termes, selon l'invention, le bord 131 de la toile est placé dans le moule permettant la réalisation du cône, de façon qu'il soit directement pris dans la matière formant ce dernier. Ainsi, en une seule opération, on réalise le cône 12 et on solidarise la toile 13 à ce dernier.

La figure 2 illustre, en coupe, le principe de ce moulage. Le moule comprend classiquement deux parties 21 et 22 définissant un logement dont la forme correspond au cône 12. Le tube cylindrique 11 est monté au milieu de ce logement, puis on injecte, aux conditions de température et de pression adaptées le matériau de surmoulage. Selon l'invention, l'élément de moule 22 comprend en outre une fente 23 permettant le passage de la toile 1. Celle-ci est placée de façon que son extrémité 131 se trouve à l'intérieur du logement 24. Elle sera ainsi automatiquement solidarisée au cône 12, lorsque la matière injectée aura refroidi et durci.

Selon un premier mode de réalisation, simple à mettre en oeuvre, le bord 131 forme un angle de l'ordre de 90° avec la tangente du cône.

Selon un second mode de réalisation, la position de ce bord 131 à l'intérieur du logement 24, sera préférentiellement choisie de façon que la liaison soit suffisamment solide et que la toile forme un angle faible (par exemple inférieur à 45°, et si possible à 20°) avec la tangente à l'endroit où elle pénètre dans la matière, de façon à limiter le risque de présence d'une bosse, et en conséquence d'obtenir un enroulement de bonne qualité.

Le cône 12 peut être réalisé en tout matériau plastique adapté au moulage. Il peut notamment s'agir d'un polyuréthane, ou d'un matériau présentant des caractéristiques similaires, ne nécessitant ni de très haute pression de moulage (par exemple environ 15 bars), ni de très haute température (par exemple environ 80° C) qui pourraient dégrader le tissu, ou plus généralement, le matériau utilisé pour l'écran 13.

Ce matériau pourra être choisi, en fonction des circonstances, de façon à réaliser des cônes plus ou moins durs, la dureté ou la souplesse pouvant permettre dans certains cas, la tension de la toile 13. Une dureté de l'ordre de 70 Shore A offre ainsi une souplesse pouvant être intéressant. Bien sûr, des duretés plus importantes sont également envisageables, selon les cas.

La forme tronconique peut bien sûr être remplacée par d'autres formes adaptées, en fonction des besoins et notamment du design de la vitre à occulter (plusieurs troncs de cône, ou plusieurs troncs de cylindre, formant un "escalier", ou un cône par morceaux...)

Par ailleurs, on notera que le moule est préférentiellement équipé de moyens permettant d'empêcher que le matériau pénètre dans la fente 23, et se fixe à une portion de l'écran, au voisinage du bord 131, ce qui, à nouveau, perturberait l'enroulement. Il peut notamment s'agir de coussins, ou joints en matière silicone relativement souple venant épouser les pièces à chercher. Avantageusement, deux joints en vis-à-vis peuvent être prévus, pour prendre le tissu en sandwich.

## Revendications

1. Procédé de fabrication d'un store à enrouleur présentant un écran souple (13) dont un premier bord (132) est solidaire d'une barre de tirage (14) et un second bord (131) solidaire d'un support d'enroulement (12) de forme non cylindrique et adaptée à l'enroulement dudit écran souple, ladite barre de tirage (14) prenant des positions non parallèles lors de son déplacement,
**caractérisé en ce que** ladite forme du support d'enroulement (12) est obtenue par moulage ou surmoulage, ledit second bord (131) de l'écran souple étant pris simultanément dans la masse dudit support d'enroulement (12).

2. Procédé selon la revendication 1, **caractérisé en ce que** ladite forme du support d'enroulement est tronconique.

3. Procédé selon l'une quelconque des revendications 1 et 2, **caractérisé en ce que** ledit support d'enroulement (12) est obtenu par surmoulage d'un élément non cylindrique sur un élément cylindrique (11).

4. Procédé selon la revendication 3, **caractérisé en ce que** ledit élément cylindrique (11) est un tube métallique.

5. Procédé selon l'une quelconque des revendications 1 à 4, **caractérisé en ce que** ledit moulage ou surmoulage est réalisé en un matériau nécessitant une pression de l'ordre de 15 bars et/ou une température, de l'ordre de 80°, de façon à ne pas détériorer ledit écran souple.

6. Procédé selon la revendication 5, **caractérisé en ce que** ledit matériau est du polyuréthane.

7. Procédé selon l'une quelconque des revendications 5 et 6, **caractérisé en ce que** ledit matériau présente une dureté de l'ordre de 70 Shore A.

8. Procédé selon l'une quelconque des revendications 1 à 7, **caractérisé en ce que** ledit second bord (131) forme un angle de l'ordre de 90° avec la tangente dudit support d'enroulement.

9. Procédé selon l'une quelconque des revendications 1 à 7, **caractérisé en ce que** ledit second bord forme un angle inférieur à 45° avec la tangente dudit support d'enroulement.

10. Store à enrouleur présentant un écran souple (13) dont un premier bord (132) est solidaire d'une barre de tirage (14) et un second bord (131) solidaire d'un support d'enroulement (12) de forme non cylindrique et adaptée à l'enroulement dudit écran souple, ladite barre de tirage prenant des positions non parallèles lors de son déplacement,
**caractérisé en ce que** ladite forme du support d'enroulement (12) comprend un élément moulé ou surmoulé, ledit second bord de l'écran souple étant pris pendant le moulage dans la masse dudit support d'enroulement.

11. Store selon la revendication 10, **caractérisé en ce qu'**il est destiné à équiper une portière de véhicule automobile.

12. Moule pour la fabrication d'un store à enrouleur présentant un écran souple (13) dont un premier bord (132) est solidaire d'une barre de tirage (14) et un second bord (131) solidaire d'un support d'enroulement (12) de forme non cylindrique et adapté à l'enroulement dudit écran souple, ladite barre de tirage (14) prenant des positions non parallèles lors de son déplacement,
**caractérisé en ce qu'**il définit ladite forme du support d'enroulement (12), et **en ce qu'**il comprend des moyens pour prendre simultanément dans la masse dudit support d'enroulement ledit second bord (131).

13. Moule selon la revendication 12, **caractérisé en ce qu'**il comprend une fente permettant le passage d'une portion dudit écran souple.

14. Moule selon l'une quelconque des revendications 12 et 13, **caractérisé en ce qu'**il comprend au moins un coussin formant des moyens d'étanchéité empêchant le matériau de moulage de se diffuser sur une portion dudit écran souple.

15. Moule selon la revendication 13, **caractérisé en ce qu'**il comprend deux coussins en vis-à-vis venant prendre en sandwich ledit écran souple.

## Claims

1. Method for producing a roller blind having a flexible screen (13), a first edge (132) of which is fixedly joined to a pulling bar (14) and a second edge (131) of which is fixedly joined to a non-cylindrical rolling support (12) which is capable of rolling up the flexible screen, the pulling bar (14) taking up non-parallel positions during its movement,
**characterised in that** the shape of the rolling support (12) is obtained by means of moulding or overmoulding, the second edge (131) of the flexible screen being simultaneously engaged in the mass of the rolling support (12).

2. Method according to claim 1, **characterised in that** the shape of the rolling support is frustoconical.

3. Method according to either claim 1 or claim 2, **characterised in that** the rolling support (12) is obtained by overmoulding a non-cylindrical element on a cylindrical element (11).

4. Method according to claim 3, **characterised in that** the cylindrical element (11) is a metal tube.

5. Method according to any one of claims 1 to 4, **characterised in that** the moulding or overmoulding is carried out with a material which requires a pressure in the order of 15 bar and/or a temperature in the order of 80° so as not to damage the flexible screen.

6. Method according to claim 5, **characterised in that** the material is polyurethane.

7. Method according to either claim 5 or claim 6, **characterised in that** the material has a hardness in the order of 70 Shore A.

8. Method according to any one of claims 1 to 7, **characterised in that** the second edge (131) forms an angle in the order of 90° with the tangent of the rolling support.

9. Method according to any one of claims 1 to 7, **characterised in that** the second edge forms an angle which is less than 45° with the tangent of the rolling support.

10. Roller blind having a flexible screen (13), a first edge (132) of which is fixedly joined to a pulling bar (14) and a second edge (131) of which is fixedly joined to a non-cylindrical rolling support (12) which is capable of rolling up the flexible screen, the pulling bar taking up non-parallel positions during its movement,
**characterised in that** the shape of the rolling support (12) comprises a moulded or overmoulded element, the second edge of the flexible screen being engaged in the mass of the rolling support during the moulding operation.

11. Blind according to claim 10, **characterised in that** it is intended to be provided on a motor vehicle door.

12. Mould for producing a roller blind having a flexible screen (13), a first edge (132) of which is fixedly joined to a pulling bar (14) and a second edge (131) of which is fixedly joined to a non-cylindrical rolling support (12) which is capable of rolling up the flexible screen, the pulling bar (14) taking up non-parallel positions during its movement,
**characterised in that** it defines the shape of the rolling support (12), and **in that** it comprises means for simultaneously engaging the second edge (131) in the mass of the rolling support.

13. Mould according to claim 12, **characterised in that** the mould comprises an aperture which allows the passage of a portion of the flexible screen.

14. Mould according to either claim 12 or claim 13, **characterised in that** the mould comprises at least one cushion which forms sealing means which prevent the moulding material from spreading to a portion of the flexible screen.

15. Mould according to claim 13, **characterised in that** the mould comprises two cushions which face each other so as to sandwich the flexible screen.

## Patentansprüche

1. Verfahren zur Herstellung eines Rollos mit Aufwickelvorrichtung, umfassend eine weiche Stoffbahn (13), deren erster Rand (132) mit einer Zugstange (14) verbunden ist, und deren zweiter Rand (131) mit einer Aufwickelstütze (12) von nicht zylindrischer Form, die an das Aufwickeln der weichen Stoffbahn angepasst ist, verbunden ist, wobei die Zugstange (14) bei ihrer Verschiebung nicht parallele Positionen einnimmt,
**dadurch gekennzeichnet, dass** die Form der Aufwickelstütze (12) durch Formen oder Aufformen erhalten wird, wobei der zweite Rand (131) der weichen Stoffbahn gleichzeitig in der Masse der Aufwickelstütze (12) erfasst wird.

2. Verfahren nach Anspruch 1, **dadurch gekennzeichnet, dass** die Form der Aufwickelstütze kegelstumpfartig ist.

3. Verfahren nach einem der Ansprüche 1 und 2, **dadurch gekennzeichnet, dass** die Aufwickelstütze (12) durch Aufformen eines nicht zylindrischen Elements auf ein zylindrisches Element (11) erhalten wird.

4. Verfahren nach Anspruch 3, **dadurch gekennzeichnet, dass** das zylindrische Element (11) ein Metallrohr ist.

5. Verfahren nach einem der Ansprüche 1 bis 4, **dadurch gekennzeichnet, dass** das Formen oder Aufformen aus einem Material erfolgt, das einen Druck von ungefähr 15 bar und/oder eine Temperatur von ungefähr 80° erfordert, um die weiche Stoffbahn nicht zu beeinträchtigen.

6. Verfahren nach Anspruch 5, **dadurch gekennzeichnet, dass** das Material Polyurethan ist.

7. Verfahren nach einem der Ansprüche 5 und 6, **dadurch gekennzeichnet, dass** das Material eine Härte von ungefähr 70 Shore A aufweist.

8. Verfahren nach einem der Ansprüche 1 bis 7, **dadurch gekennzeichnet, dass** der zweite Rand (131) einen Winkel von ungefähr 90° mit der Tangente der Aufwickelstütze bildet.

9. Verfahren nach einem der Ansprüche 1 bis 7, **dadurch gekennzeichnet, dass** der zweite Rand einen Winkel unter 45° mit der Tangente der Aufwickelstütze bildet.

10. Rollo mit Aufwickelvorrichtung, umfassend eine weiche Stoffbahn (13), deren erster Rand (132) mit einer Zugstange (14) verbunden ist, und deren zweiter Rand (131) mit einer Aufwickelstütze (12) von nicht zylindrischer Form verbunden ist, die an das Aufwickeln der weichen Stoffbahn angepasst ist, wobei die Zugstange bei ihrer Verschiebung nicht parallele Positionen einnimmt,
**dadurch gekennzeichnet, dass** die Form der Aufwickelstütze (12) ein geformtes oder aufgeformtes Element umfasst, wobei der zweite Rand der weichen Stoffbahn während des Formens in der Masse der Aufwickelstütze erfasst wird.

11. Rollo nach Anspruch 10, **dadurch gekennzeichnet, dass** es dazu bestimmt ist, für eine Fahrzeugtür verwendet zu werden.

12. Form zur Herstellung eines Rollos mit Aufwickelvorrichtung, umfassend eine weiche Stoffbahn (13), deren erster Rand (132) mit einer Zugstange (14) verbunden ist und deren zweiter Rand (131) mit einer Aufwickelstütze (12) von nicht zylindrischer Form, die an das Aufwickeln der weichen Stoffbahn angepasst ist, verbunden ist, wobei die Zugstange (14) bei ihrer Verschiebung nicht parallele Positionen einnimmt,
**dadurch gekennzeichnet, dass** sie die Form der Aufwickelstütze (12) definiert und dass sie Mittel umfasst, um den zweiten Rand (131) gleichzeitig in der Masse der Aufwickelstütze zu erfassen.

13. Form nach Anspruch 12, **dadurch gekennzeichnet, dass** sie einen Schlitz umfasst, der den Durchgang eines Abschnitts der weichen Stoffbahn ermöglicht.

14. Form nach einem der Ansprüche 12 und 13, **dadurch gekennzeichnet, dass** sie mindestens ein Kissen umfasst, das Dichtungsmittel bildet, die verhindern, dass das Formungsmaterial auf einen Abschnitt der weichen Stoffbahn diffundiert.

15. Form nach Anspruch 13, **dadurch gekennzeichnet, dass** sie zwei gegenüber liegende Kissen umfasst, die die weiche Stoffbahn sandwichartig erfassen.
